# EUROPÄISCHE PATENTSCHRIFT

(11) **EP 1 314 005 B1**
(45) Veröffentlichungstag und Bekanntmachung des Hinweises auf die Patenterteilung: **12.05.2004**
(21) Anmeldenummer: 01976133.7
(22) Anmeldetag: 22.08.2001
(51) Int. Cl.: G01F 23/288

(54) **VERFAHREN ZUR REAKTORFÜLLSTANDSMESSUNG**
METHOD FOR MEASURING THE LEVEL OF A MEDIUM IN A REACTOR
PROCEDE DE MESURE DE NIVEAU DE REMPLISSAGE DE REACTEUR

(30) Priorität: 25.08.2000 DE 10041813
(43) Veröffentlichungstag der Anmeldung: 28.05.2003
(73) Patentinhaber: Basell Poliolefine Italia S.p.A., 20125 Milano (IT)
(72) Erfinder: BIDELL, Wolfgang, 1640 Rhode-St Genese - Bruxelles (BE); LUTZ, Gerald, 50999 Köln (DE); LANGHAUSER, Franz, 67152 Ruppertsberg (DE); SCHERER, Günter, 67435 Neustadt an der Weinstrasse (DE); MECKELNBURG, Dirk, 67063 Ludwigshafen (DE); OELZE, Jürgen, 67071 Ludwigshafen (DE); GERBIG, Hans-Jürgen, 67346 Speyer (DE); HÜHNERBEIN, Jürgen, 53562 Katherinen (DE)
(74) Vertreter: Colucci, Giuseppe
(86) Internationale Anmeldenummer: PCT/EP2001/009683
(87) Internationale Veröffentlichungsnummer: WO 2002/016019

(56) Entgegenhaltungen:
- US-A- 2 378 219
- US-A- 2 714 167
- US-A- 5 300 781
- PATENT ABSTRACTS OF JAPAN vol. 2000, no. 22, 9. März 2001 (2001-03-09) & JP 2001 124613 A (TEIJIN ENGINEERING KK), 11. Mai 2001 (2001-05-11)

## Beschreibung

Die vorliegende Erfindung betrifft ein Verfahren zur Reaktorfüllstandsmessung bei kontinuierlich betriebenen Polymerisationsprozessen, wobei die jeweilige Phasengrenzfläche im Reaktor mit Hilfe einer ionisierenden Strahlung gemessen wird, welches dadurch gekennzeichnet ist, dass mindestens eine Meßeinheit bestehend aus einer Strahlungsquelle, welche eine ionisierende Strahlung emittiert und einem entsprechenden Detektor an die Phasengrenzfläche im Reaktor herangeführt und dort flexibel fixiert wird, wobei die Reaktorfüllstandsmessung in der Weise erfolgt, dass man die Phasengrenzfläche mit Hilfe der radioaktiven Rückstreumessug ermittelt.

Weiterhin betrifft die vorliegende Erfindung eine Vorrichtung zur Reaktorfüllstandsmessung bei kontinuierlich betriebenen Polymerisationsprozessen.

Kontinuierliche Polymerisationsprozesse werden üblicherweise in einer Flüssigphase, in einer Aufschlämmung, in der Bulkphase oder aber in der Gasphase durchgeführt. Das dabei vorliegende Reaktionsgemisch wird entweder als Wirbelbett betrieben (EP-B 0089691) oder aber durch bewegliche Rührer in Bewegung gehalten. Für solche Zwecke sind u. a. vertikal angeordnete; frei tragende Wendelrührer gut geeignet (EP-B 000512, EP-B 031417).

Für eine gute Kontrolle eines kontinuierlich betriebenen Polymerisationsprozesses ist eine Messung des Reaktorfüllstandes von zentraler Bedeutung, da ohne diese eine stabile Druck- und Temperaturführung und damit eine konstante Produktqualität nur schwer realisierbar ist.

In vielen Polymerisationsreaktoren wird der Reaktorfüllstand, d.h. die Phasengrenzfläche zwischen dem Reaktionsmedium und dem darüberliegenden Medium häufig mit Hilfe einer radioaktiven Absorptionsmessung bestimmt. Dabei kommen sowohl radioaktive Punktoder Stabstrahler zum Einsatz, die entweder an der Reaktoraußenwand oder aber in einem Zentralrohr im Reaktor angebracht sind. Die jeweiligen Detektoren sind an verschiedenen Stellen im Bereich der Reaktorwand bzw. des Reaktordeckels positioniert. Da sich mit der Füllhöhe des Reaktors die Länge der Durchstrahlung des Reaktionsmediums ändert und im Reaktionsmedium eine stärkere Absorption radioaktiver Strahlen als in dem darüber liegenden Medium stattfindet, kann aus der am Detektor eintreffenden Reststrahlung die jeweilige Füllhöhe des Reaktionsmediums abgeleitet werden.

Die radioaktive Absorptionsmessung weist indes den Nachteil auf, dass durch die starke Absorption der radioaktiven Strahlung im Reaktionsmedium es insbesondere bei kommerziellen Gasphasenreaktoren nicht möglich ist, den gesamten Reaktor zu durchstrahlen, so dass lediglich ein Teilbereich vermessen werden kann. Dabei kommt noch erschwerend die Absorption der Strahlung durch das Metall der Reaktorwand und des Zentralrohrs hinzu, welches ebenfalls durchstrahlt werden muß. Weiterhin ist es für den Meßbereich der radioaktiven Absorptionsmessung ungünstig, dass die Intensität der Strahlungsquelle aufgrund von Strahlenschutzbestimmungen zu limitieren ist.

Bei der radioaktiven Absorptionsmessung handelt es sich um eine relative Meßmethode, die u. a. von der Meßanordnung von radioaktiver Strahlungsquelle und Detektor sowie von Parametern des Polymerisationsprozesses sowie des erhaltenen Polymers stark abhängig ist. So ist beispielsweise die Absorption in einem gerührten Festbett abhängig von der Schüttdichte, der Art des verwendeten Polymers, der Kreisgasmenge, der Feinstaubbildung, dem Reaktorausstoß und der Form des Festbettes. Die Absorption in einer Gasphase wiederum hängt u. a. ab von der Dichte des Gases sowie von dessen Zusammensetzung, ferner vom Druck und der Temperatur des Reaktors.

Ungenauigkeiten, Relativmessungen und große Empfindlichkeiten bei Störungen in kontinuierlich betriebenen Polymerisationsprozessen verursachen immer wieder Druck- und Temperaturschwankungen, die dann durch manuelle Eingriffe behoben werden müssen, um auf diese Weise eine stabile Prozeßführung und eine konstante Produktqualität des erhaltenen Polymers zu gewährleisten. Weiterhin beobachtet man insbesondere bei Gasphasenpolymerisationen in einem gerührten Festbett ein Schwanken der absoluten Festbettmenge im Reaktor, was dann durch Anheben- bzw. durch Absenken des Füllstandes wieder korrigiert werden muß. Für ein gutes Betreiben eines Reaktors wäre es hilfreich, die absolute Füllstandshöhe zu kennen.

Der vorliegenden Erfindung lag daher die Aufgabe zugrunde, den geschilderten Nachteilen abzuhelfen und ein möglichst wenig aufwendiges Verfahren zur Reaktorfüllstandsmessung bei kontinuierlich betriebenen Polymerisationsprozessen zu entwickeln, welches eine direkte und absolute Ermittlung der jeweiligen Phasengrenzfläche ermöglicht. Weiterhin erstreckte sich die Aufgabe der vorliegenden Erfindung auch auf die Entwicklung einer für derartige Reaktorfüllstandsmessungen geeigneten Vorrichtung.

Demgemäß wurde ein neues Verfahren zur Reaktorfüllstandsmessung bei kontinuierlich betriebenen Polymerisationsprozessen entwikkelt, wobei die jeweilige Phasengrenzfläche im Reaktor mit Hilfe einer ionisierenden Strahlung gemessen wird, welches dadurch gekennzeichnet ist, dass mindestens eine Meßeinheit bestehend aus einer Strahlungsquelle, welche eine ionisierende Strahlung emittiert und einem entsprechenden Detektor an die Phasengrenzfläche im Reaktor herangeführt und dort flexibel fixiert wird, wobei die Reaktorfüllstandsmessung in der Weise erfolgt, dass man die Phasengrenzfläche mit Hilfe der radioaktiven Rückstreumessung ermittelt.

Beim erfindungsgemäßen Verfahren verwendet man mindestens eine Meßeinheit bestehend aus einer Strahlungsquelle, welche die ionisierende Strahlung emittiert und einen entsprechenden Detektor. Strahlungsquelle und Detektor können gegebenenfalls auch durch einen oder mehrere Abschirmungen, beispielsweise Bleikörper voneinander getrennt sein. Geeignete Strahlungsquellen sind u. a. radioaktive Strahler wie Caesium¹³⁷- oder Cobalt⁶⁰-Strahler oder aber eine übliche Neutronenquelle. Als Detektoren finden u. a. Geiger-Müller-Zähler, Szintillationszähler oder aber allgemein Detektoren, die eine emittierende Strahlung detektieren können, Verwendung.

Nach dem erfindungsgemäßen Verfahren wird eine solche Meßeinheit an die Phasengrenzfläche im Reaktor herangeführt und dort flexibel fixiert. Dies kann u. a. dadurch erfolgen, dass man die Meßeinheit bestehend aus der Strahlenquelle und dem Detektor an die Phasengrenzfläche im Reaktor heranführt und dort vor Beginn der Polymerisation flexibel fixiert. Hierfür kann sich u.a. die Verwendung eines beweglichen Stabes eignen. Weiterhin ist dies aber auch dadurch möglich, dass man mehrere Meßeinheiten bestehend aus jeweils einer Strahlungsquelle und einem Detektor an unterschiedliche Stellen im Reaktor, aber in der Nähe der Phasengrenzfläche zur Reaktorfüllstandsmessung einsetzt, wobei die Meßeinheit verwendet wird, die der Phasengrenzfläche am nächsten steht. In Abhängigkeit von den jeweils vorliegenden Produkt- und Prozeßparametern werden dann wahlweise verschiedene Meßeinheiten eingesetzt. Die dabei verwendeten Meßeinheiten aus Strahlungsquelle und Detektor sind im Handel käuflich.

Bei der Ermittlung des Reaktorfüllstands wird die Phasengrenzfläche mit Hilfe der radioaktiven Rückstreumessung ermittelt. Dabei nutzt man die Tatsache, dass ein Reaktionsmedium mit einer geringeren Dichte, beispielsweise ein Gas, stets eine geringe radioaktive Rückstreuung aufweist als ein Reaktionsmedium mit einer höheren Dichte, beispielsweise ein bewegtes Festbett.

Das erfindungsgemäße Verfahren ist zur Reaktorfüllstandsmessung bei kontinuierlich betriebenen Polymerisationsprozessen geeignet, insbesondere bei Verfahren in der Flüssigphase, in einer Aufschlämmung, in der Bulkphase oder aber in der Gasphase. Es ist u. a. zur Herstellung verschiedener Polymerer verwendbar, die aus Monomeren mit Vinylendgruppen bestehen. Das Verfahren eignet sich insbesondere zur Herstellung von Polymeren aus C₂-C₈-Alk-1-enen sowie von vinylaromatischen Monomeren, beispielsweise von Styrol oder von α-Methylstyrol.

Als C₂-C₈-Alk-1-ene kommen insbesondere Ethylen, Propylen, But-1-en, Pent-1-en, Hex-1-en, Hept-1-en oder Oct-1-en in Betracht, wobei Ethylen, Propylen oder But-1-en bevorzugt eingesetzt werden. Das Verfahren kann zur Herstellung von Homopolymeren der C₂-C₈-Alk-1-ene oder von Copolymeren der C₂-C₈-Alk-1-ene, bevorzugt mit bis zu 30 Gew.-% einpolymerisierter anderer Alk-1-ene mit bis zu 8 C-Atomen, verwendet werden. Unter Copolymeren sollen hierbei sowohl statistische Copolymere als auch die sogenannten Block- oder Impäctcopolymere verstanden werden.

In der Regel wird das erfindungsgemäße Verfahren in wenigstens einer Reaktionszone, häufig auch in zwei oder mehr Reaktionszonen durchgeführt, d.h. die Polymerisationsbedingungen unterscheiden sich in den Reaktionszonen soweit, daß Polymere mit unterschiedlichen Eigenschaften erzeugt werden. Für die Homopolymere oder statistischen Copolymere kann dies beispielsweise die Molmasse sein, d.h. zur Verbreiterung der Molmassenverteilung werden in den Reaktionszonen Polymere mit unterschiedlichen Molmassen hergestellt. Bevorzugt werden in den Reaktionszonen unterschiedliche Monomere bzw. Monomerzusammensetzungen polymerisiert. Dies führt dann üblicherweise zu den Block- oder Impactcopolymeren.

Besonders gut geeignet ist das erfindungsgemäße Verfahren zur Reaktorfüllstandsmessung bei der Herstellung von Homopolymeren des Propylens oder von Copolymeren des Propylens mit bis zu 30 Gew.-% einpolymerisierter anderer Alk-1-ene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten sie im allgemeinen bis zu 15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Die Block- oder Impactcopolymere des Propylens sind Polymere, bei denen man in der ersten Stufe ein Propylenhomopolymerisat oder ein statistisches Copolymer des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere C₄-C₈-Alk-1-ene enthalten kann, hinzupolymerisiert. In der Regel wird soviel des Propylen-Ethylen-Copolymeren hinzupolymerisiert, daß das in der zweiten Stufe erzeugte Copolymere im Endprodukt von 3 bis 60 Gew-% ausmacht.

Das erfindungsgemäße Verfahren kann u. a. zur Reaktorfüllstandsmessung bei Polymerisationen in der Gasphase verwendet werden, wobei dafür sowohl eine Polymerisation in einem Wirbelbett als auch in einer gerührten Gasphase möglich ist.

Sofern das Verfahren zur Reaktorfüllstandsmessung bei der Herstellung von Polymeren von C₂-C₈-Alk-1-enen verwendet wird, erfolgt die Polymerisation vorzugsweise mit Hilfe eines Ziegler-Natta-Katalysatorsystems. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Das erfindungsgemäße Verfahren kann aber auch zur Reaktorfüllstandsmessung bei Polymerisationen mit Hilfe von Ziegler-Natta-Katalysatorsystemen auf der Basis von Metallocenverbindungen bzw. auf der Basis von polymerisationsaktiven Metallkomplexen eingesetzt werden.

Zur Herstellung der titanhaltigen Feststoffkomponente a) werden als Titanverbindungen im allgemeinen die Halogenide oder Alkoholate des drei- oder vierwertigen Titans verwendet, wobei auch Titanalkoxyhalogenverbindungen oder Mischungen verschiedener Titanverbindungen in Betracht kommen. Bevorzugt werden die Titanverbindungen eingesetzt, die als Halogen Chlor enthalten. Ebenfalls bevorzugt sind die Titanhalogenide, die neben Titan nur Halogen enthalten, und hierbei vor allem die Titanchloride und insbesondere Titantetrachlorid.

Die titanhaltige Feststoffkomponente a) enthält vorzugsweise mindestens eine halogenhaltige Magnesiumverbindung. Als Halogene werden hierbei Chlor, Brom, Jod oder Fluor verstanden, wobei Brom oder insbesondere Chlor bevorzugt sind. Die halogenhaltigen Magnesiumverbindungen werden entweder bei der Herstellung der titanhaltige Feststoffkomponente a) direkt eingesetzt oder bei deren Herstellung gebildet. Als Magnesiumverbindungen, die sich zur Herstellung der titanhaltige Feststoffkomponente a) eignen, kommen vor allem die Magnesiumhalogenide, wie insbesondere Magnesiumdichlorid oder Magnesiumdibromid, oder Magnesiumverbindungen, aus denen die Halogenide in üblicher Weise z.B. durch Umsetzung mit Halogenierungsmitteln erhalten werden können wie Magnesiumalkyle, Magnesiumaryle, Magnesiumalkoxy- oder Magnesiumaryloxyverbindungen oder Grignardverbindungen in Betracht. Bevorzugte Beispiele für halogenfreie Verbindungen des Magnesiums, die zur Herstellung der titanhaltige Feststoffkomponente a) geeignet sind, sind n-Butylethylmagnesium oder n-Butyloctylmagnesium. Bevorzugte Halogenierungsmittel sind Chlor oder Chlorwasserstoff. Es können jedoch auch die Titanhalogenide als Halogenierungsmittel dienen.

Darüber hinaus enthält die titanhaltige Feststoffkomponente a) zweckmäßigerweise Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II) 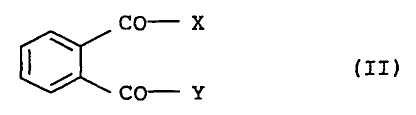 verwendet, wobei X und Y jeweils für ein Chlor- oder Bromatom oder einen C₁-C₁₀-Alkoxyrest oder gemeinsam für Sauerstoff in Anhydridfunktion stehen. Besonders bevorzugte Elektronendonorverbindungen sind Phthalsäureester, wobei X und Y einen C₁-C₈-Alkoxyrest bedeuten. Beispiele für vorzugsweise eingesetzte Phthalsäureester sind Diethylphthalat, Di-n-butylphthalat, Di-isobutylphthalat, Di-n-pentylphthalat, Di-n-hexylphthalat, Di-nheptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise C₁-C₁₅-Alkanole oder C₅-C₇-Cycloalkanole, die ihrerseits eine oder mehrere C₁-C₁₀-Alkylgruppen tragen können, ferner C₆-C₁₀-Phenole.

Es können auch Mischungen verschiedener Elektronendonorverbindungen verwendet werden.

Bei der Herstellung der titanhaltigen Feststoffkomponente a) werden in der Regel pro Mol der Magnesiumverbindung von 0,05 bis 2,0 mol, bevorzugt von 0,2 bis 1,0 mol, der Elektronendonorverbindungen eingesetzt.

Darüber hinaus kann die titanhaltige Feststoffkomponente a) anorganische Oxide als Träger enthalten. Es wird in der Regel ein feinteiliges anorganisches Oxid als Träger verwendet, welches einen mittleren Teilchendurchmesser von 5 bis 200 µm, bevorzugt von 20 bis 70 µm, aufweist. Unter dem mittleren Teilchendurchmesser ist hierbei der volumenbezogene Mittelwert (Medianwert) der durch Coulter-Counter-Analyse bestimmten Korngrößenverteilung zu verstehen.

Vorzugsweise sind die Körner des feinteiligen anorganischen Oxids aus Primärpartikeln zusammengesetzt, die einen mittleren Teilchendurchmesser der Primärpartikel von 1 bis 20 µm, insbesondere von 1 bis 5 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich, die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhaltenen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms, z.B. des Software-Pakets Analysis der Fa. SIS.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 cm³/g, bevorzugt von 1,0 bis 4,0 cm³/g, und eine spezifische Oberfläche von 10 bis 1000 m²/g, bevorzugt von 100 bis 500 m²/g, auf, wobei hier die durch Quecksilber-Porosimetrie nach DIN 66133 und durch Stickstoff-Adsorption nach DIN 66131 bestimmten Werte zu verstehen sind.

Es ist auch möglich, ein anorganisches Oxid einzusetzen, dessen pH-Wert, d.h. der negative dekadische Logarithmus der Protonenkonzentration, im Bereich von 1 bis 6,5 und insbesondere im Bereich von 2 bis 6, liegt.

Als anorganische Oxide kommen vor allem die Oxide des Siliciums, das Aluminiums, des Titans oder eines der Metalle der I. bzw. der II. Hauptgruppe des Periodensystems in Betracht. Als besonders bevorzugtes Oxid wird neben Aluminiumoxid oder Magnesiumoxid oder einem Schichtsilikat vor allem Siliciumoxid (Kieselgel) verwendet. Es können auch Mischoxide wie Aluminiumsilikate oder Magnesiumsilikate eingesetzt werden.

Die als Träger eingesetzten anorganischen Oxide enthalten auf ihrer Oberfläche Wasser. Dieses Wasser ist zum Teil physikalisch durch Adsorption und zum Teil chemisch in Form von Hydroxylgruppen gebunden. Durch thermische oder chemische Behandlung kann der Wassergehalt des anorganischen Oxids reduziert oder ganz beseitigt werden, wobei in der Regel bei einer chemischen Behandlung übliche Trocknungsmittel wie SiCl₄, Chlorsilane oder Aluminiumalkyle zum Einsatz kommen. Der Wassergehalt geeigneter anorganischer Oxide beträgt von 0 bis 6 Gew.-%. Vorzugsweise wird ein anorganische Oxid in der Form, wie es im Handel erhältlich ist, ohne weitere Behandlung eingesetzt.

Die Magnesiumverbindung und das anorganische Oxid liegen innerhalb der titanhaltigen Feststoffkomponente a) bevorzugt in solchen Mengen vor, daß pro Mol des anorganischen Oxids von 0,1 bis 1,0 mol, insbesondere von 0,2 bis 0,5 mol der Verbindung des Magnesiums vorhanden sind.

Bei der Herstellung der titanhaltigen Feststoffkomponente a) kommen in der Regel ferner C₁- bis C₈-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066, der US-A 4 857 613 und der US-A 5 288 824 beschrieben. Bevorzugt wird das aus der DE-A 195 29 240 bekannte Verfahren angewandt.

Geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man in der Regel als weiteren Cokatalysator Elektronendonorverbindungen c) wie mono- oder polyfunktionelle Carbonsäuren, Carbonsäureanhydride oder Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen 'sein können. Bevorzugte Elektronendonorverbindungen sind dabei siliciumorganische Verbindungen der allgemeinen Formel (I)

R¹ ₙSi(OR²)₄₋ₙ (I)

wobei R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bezeichnet und n für die ganzen Zahlen 1, 2 oder 3 steht. Besonders bevorzugt werden solche Verbindungen, in denen R¹ eine C₁-C₈-Alkylgruppe oder eine 5- bis 7-gliedrige Cycloalkylgruppe sowie R² eine C₁-C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisopropyl-tert.-butylsilan, Dimethoxyisobutyl-sek.-butylsilan und Dimethoxyisopropyl-sek.-butylsilan hervorzuheben.

Bevorzugt werden die Cokatalysatoren b) und c) in einer solchen Menge eingesetzt, daß das Atomverhältnis zwischen Aluminium aus der Aluminiumverbindung b) und Titan aus der titanhaltigen Feststoffkomponente a) von 10:1 bis 800:1, insbesondere von 20:1 bis 200:1 beträgt und das Molverhältnis zwischen der Aluminiumverbindung b) und der Elektronendonorverbindung c) bei 1:1 bis 250:1, insbesondere bei 10:1 bis 80:1, liegt.

Die titanhaltige Feststoffkomponente a), die Aluminiumverbindung b) und die in der Regel verwendete Elektronendonorverbindung c) bilden zusammen das Ziegler-Natta-Katalysatorsystem. Die Katalysatorbestandteile b) und c) können zusammen mit der titanhaltigen Feststoffkomponente a) oder als Gemisch oder auch in beliebiger Reihenfolge einzeln in denn Polymerisationsreaktor eingebracht werden.

Das erfindungsgemäße Verfahren zur Reaktorfüllstandsmessung kann auch bei der Polymerisation von C₂-C₈-Alk-1-enen mit Hilfe von Ziegler-Natta-Katalysatorsysteme auf Basis von Metallocenverbindungen bzw. auf der Basis von polymerisationsaktiven Metallkomplexen verwendet werden.

Unter Metallocenen sollen hier Komplexverbindungen aus Metallen von Nebengruppen des Periodensystems mit organischen Liganden verstanden werden, die zusammen mit metalloceniumionenbildenden Verbindungen wirksame Katalysatorsysteme ergeben. Die Metallocenkomplexe liegen im Katalysatorsystem in der Regel geträgert vor. Als Träger werden häufig anorganische Oxide eingesetzt. Bevorzugt sind die oben beschriebenen anorganischen Oxide, die auch zur Herstellung der titanhaltigen Feststoffkomponente a) verwendet werden.

Üblicherweise eingesetzte Metallocene enthalten als Zentralatome Titan, Zirkonium oder Hafnium, wobei Zirkonium bevorzugt ist. Im allgemeinen ist das Zentralatom über eine π-Bindung an mindestens eine, in der Regel substituierte, Cyclopentadienylgruppe sowie an weitere Substituenten gebunden. Die weiteren Substituenten können Halogene, Wasserstoff oder organische Reste sein, wobei Fluor, Chlor, Brom, oder Jod oder eine C₁-C₁₀-Alkylgruppe bevorzugt sind.

Bevorzugte Metallocene enthalten Zentralatome, die über zwei π-Bindungen an zwei substituierte Cyclopentadienylgruppen gebunden sind, wobei diejenigen besonders bevorzugt sind, in denen Substituenten der Cyclopentadienylgruppen an beide Cyclopentadienylgruppen gebunden sind. Insbesondere sind Komplexe bevorzugt, deren Cyclopentadienylgruppen zusätzlich durch cyclische Gruppen an zwei benachbarten C-Atomen substituiert sind.

Bevorzugte Metallocene sind auch solche, die nur eine Cyclopentadienylgruppe enthalten, die jedoch mit einen Rest substituiert ist, der auch an das Zentralatom gebunden ist.

Geeignete Metallocenverbindungen sind beispielsweise
Ethylenbis(indenyl)-zirkoniumdichlorid, Ethylenbis(tetrahydroindenyl)-zirkoniumdichlorid, Diphenylmethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-2-methylindenyl)-zirkoniumdichlorid, Dimethylsilandiylbis(-2-methylbenzindenyl)-zirkoniumdichlorid Dimethylsilandiylbis(-2-methyl-4-phenylindenyl)zirkoniumdichlorid, Dimethylsilandiylbis(-2-methyl-4-naphthylindenyl)zirkoniumdichlorid,
Dimethylsilandiylbis (-2-methyl-4-isopropylindenyl)zirkoniumdichlorid oder
Dimethylsilandiylbis(-2-methyl-4,6-diisopropylindenyl)zirkoniumdichlorid sowie die entsprechenden Dimethylzirkoniumverbindungen.

Die Metallocenverbindungen sind entweder bekannt oder nach an sich bekannten Methoden erhältlich.

Weiterhin enthalten die Metallocen-Katalysatorsysteme metalloceniumionenbildende Verbindungen. Geeignet sind starke, neutrale Lewissäuren, ionische Verbindungen mit lewissauren Kationen oder ionische Verbindungen mit Brönsted-Säuren als Kation. Beispiele sind hierfür Tris(pentafluorphenyl)boran, Tetrakis(pentafluorophenyl)borat oder Salze des N,N-Dimethylaniliniums. Ebenfalls geeignet als metalloceniumionenbildende Verbindungen sind offenkettige oder cyclische Alumoxanverbindungen. Diese werden üblicherweise durch Umsetzung von Trialkylaluminium mit Wasser hergestellt und liegen in der Regel als Gemische unterschiedlich langer, sowohl linearer als auch cyclischer Kettenmoleküle vor.

Darüber hinaus können die Metallocen-Katalysatorsysteme metallorganische Verbindungen der Metalle der I., II. oder III. Hauptgruppe des Periodensystems enthalten wie n-Butyl-Lithium, n-Butyl-n-octyl-Magnesium oder Tri-iso-butyl-aluminium, Triethylaluminium oder Trimethylaluminium.

Das erfindungsgemäße Verfahren kann zur Reaktorfüllstandsmessung bei kontinuierlich betriebenen Polymerisationsprozessen in dafür üblichen Reaktoren durchgeführt werden.

Geeignete Reaktoren sind u.a. kontinuierlich betriebene Rührkessel, Schleifenreaktoren oder Wirbelbettreaktoren. Die Größe der Reaktoren ist für das erfindungsgemäße Verfahren nicht von wesentlicher Bedeutung. Sie richtet sich nach dem Ausstoß, der in der oder in den einzelnen Reaktionszonen erzielt werden soll.

Als Reaktoren werden insbesondere Wirbelbettreaktoren sowie horizontal oder vertikal gerührte Pulverbettreaktoren verwendet. Das Reaktionsbett besteht dabei im allgemeinen aus dem Polymeren aus C₂-C₈-Alk-1-enen, das im jeweiligen Reaktor polymerisiert wird.

Das erfindungsgemäße Verfahren zur Reaktorfüllstandsmessung bei Polymerisationsprozesses kann in einem Reaktor oder in einer Kaskade aus hintereinander geschalteten Reaktoren durchgeführt werden, in denen das pulverförmige Reaktionsbett durch einen vertikalen Rührer in Bewegung gehalten wird, wobei sich sogenannte frei tragende Wendelrührer besonders gut eignen. Derartige Rührer sind u.a. aus der EP-B 000 512 und der EP-B 031 417 bekannt. Sie zeichnen sich insbesondere dadurch aus, daß sie das pulverförmige Reaktionsbett sehr homogen verteilen. Beispiele für solche pulverförmigen Reaktionsbette sind in der EP-B 038 478 beschrieben. Vorzugsweise besteht die Reaktorkaskade aus zwei hintereinander geschalteten, kesselförmigen, mit einem Rührer versehenen Reaktoren mit einem Rauminhalt von 0,1 bis 100 m³, beispielsweise 12,5, 25, 50 oder 75 m³.

Kontinuierliche Polymerisationsreaktionen, bei denen das erfindungsgemäße verfahren zur'Reaktorfüllstandsmessung eingesetzt wird, werden normalerweise unter üblichen Reaktionsbedingungen bei Temperaturen von 40 bis 150°C und Drücken von 1 bis 100 bar vorgenommen. Bevorzugt sind Temperaturen von 40 bis 100°C, insbesondere von 60 bis 90 °C und Drücke von 10 bis 50 bar, insbesondere von 20 bis 40 bar. Die Molmasse der gebildeten Polymere kann durch die Zugabe von in der Polymerisationstechnik üblichen Reglern, beispielsweise von Wasserstoff, kontrolliert und eingestellt werden. Neben Reglern können auch sogenannte Regulatoren, d.h. Verbindungen, die die Katalysatoraktivität beeinflussen, oder auch Antistatika eingesetzt werden. Letztere verhindern die Belagbildung an der Reaktorwand durch elektrostatische Aufladung. Die erhaltenen Polymere weisen in der Regel eine Schmelze-Fließrate (MFR) von 0,1 bis 3000 g/10 min., insbesondere von 0,2 bis 100 g/10 min, bei 230°C und unter einem Gewicht von 2,16 kg, auf. Die Schmelze-Fließrate entspricht dabei der Menge an Polymeren, die innerhalb von 10 Minuten aus der nach ISO 1133 genormten Prüfvorrichtung bei einer Temperatur von 230°C und unter einem Gewicht von 2,16 kg ausgepreßt wird. Besonders bevorzugt sind dabei solche Polymere, deren Schmelze-Fließrate 0,2 bis 50 g/10 min, bei 230°C und unter einem Gewicht von 2,16 kg, beträgt.

Die mittleren Verweilzeiten bei kontinuierlich betriebenen Polymerisationsreaktionen liegen im Bereich von 0,1 bis 10 Stunden, bevorzugt im Bereich von 0,2 bis 5 Stunden und insbesondere im Bereich von 0,3 bis 4 Stunden.

Das erfindungsgemäße Verfahren zur Reaktorfüllstandsmessung bei kontinuierlich betriebenen Polymerisationsreaktoren wird vorzugsweise in der Weise ausgeführt, dass man die Meßeinheit oder die Meßeinheiten, d. h. Strahlungsquellen und entsprechende Detektoren, kurz vor Beginn der eigentlichen Polymerisation in die Nähe der empirisch ermittelten Phasengrenzfläche zwischen den einzelnen Phasen im Reaktor bringt, dort entsprechend flexibel fixiert und dann mit Hilfe der radioaktiven Rückstreumessung die Phasengrenzfläche ermittelt.

Der radioaktiven Rückstandsmessung liegt das Prinzip zu Grunde, dass die ionisierende Strahlung in Abhängigkeit der Dichte des Füllmediums unterschiedlich stark rückgestreut wird und die rückgestreute Strahlung mit Hilfe eines Detektors gemessen und so die Höhe der Phasengrenzfläche ermittelt wird. Die Messung wird dabei in der Weise ausgeführt, dass eine Meßeinheit mit einem Strahler und einem Detektor, getrennt durch eine Abschirmung, verwendet wird. Vorzugsweise wird dabei eine Meßeinheit mit einem radioaktiven Strahler (Cs¹³⁷) und einem Szintillationsdetektor, getrennt durch eine Bleiabschirmung, an die Grenzfläche zwischen Pulverbett und Gasraum (Gasphasenpolymerisation) mittels eines Impulsratenvergleichs herangeführt.

Mit Hilfe des Einsatzes der radioaktiven Rückstreumessung lassen sich die bei der radioaktiven Absorptionsmessung beobachteten Einflußgrößen und Abhängigkeiten von Halbwertslänge und Meßanordnung direkt umgehen. Die Abhängigkeiten von Produkt- und Prozeßparametern können durch die flexible Höhenverstellung der radioaktiven Rückstreumeßsonde/Detektoreinheit spezifisch eliminiert werden.

Das erfindungsgemäße Verfahren zur Reaktorfüllstandsmessung zeichnet sich u. a. durch eine hohe Empfindlichkeit bei relativ geringen Strahlungsintensitäten der Strahlungsquelle sowie durch eine deutlich verbesserte Prozeßstabilität, insbesondere bei Verwendung von Szintillationszählern aus. Dies ist vor allem darauf zurückzuführen, dass die Meßgenauigkeit dadurch verbessert wird, dass das Meßsignal eine diskrete Sägezahnstruktur aufweist und die radioaktive Rückstreumessung schnell und sehr empfindlich auf Füllstandsänderungen reagiert. Aus diesem Grund kann die Austragsmenge aus dem Reaktor pro Austrag um bis zu 50 % reduziert werden, ohne dass dies einen Verlust an Meßgenauigkeit zur Folge hat, wodurch eine weitere Verbesserung der Prozeßstabilität bei kontinuierlichen Polymerisationsreaktionen möglich wird. Darüber hinaus beobachtet man geringere Druckschwankungen im Austragszyklon bezüglich der Treibgasmengen, eine verbesserte Druck- und Temperaturschwankung des Reaktors, eine erhöhte Produkthomogenität sowie eine verringerte Brockenbildungstendenz im Reaktor.

Die ebenfalls erfindungsgemäße Vorrichtung zur Reaktorfüllstandsmessung bei kontinuierlich betriebenen Polymersiationsprozessen ist technisch leicht handhabbar und apparativ wenig aufwendig. Es eignet sich insbesondere bei der kontinuierlichen Polymerisation von C₂-C₈-Alk-1-enen sowie von vinylaromatischen Monomeren.

### Beispiele

Das erfindungsgemäße Verfahren zur Reaktorfüllstandsmessung wurde bei der kontinuierlichen Herstellung eines Propylenhomopolymeren (Beispiel 1) sowie eines Propylen-Ethylen-Copolymeren (Beispiele 2) durchgeführt).

Bei allen Versuchen wurde ein Ziegler-Natta-Katalysatorsystem eingesetzt, das eine nach folgendem Verfahren hergestellte titanhaltige Feststoffkomponente a) enthielt.

In einer ersten Stufe wurde ein feinteiliges Kieselgel, das einen mittleren Teilchendurchmesser von 30 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 mol der Magnesiumverbindung eingesetzt wurden. Das feinteilige Kieselgel war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 15 % lag. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.

Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.

### Beispiel 1

Die Polymerisation wurde in einem vertikal durchmischten Gasphasenreaktor mit einem Nutzvolumen von 800 l, ausgestattet mit einem freitragenden Wendelrührer (80 Umdrehungen/min), durchgeführt. Der Reaktor enthielt ein bewegtes Festbett aus feinteiligem Polymerisat. Der Reaktordruck betrug 32 bar. Als Katalysator wurde die titanhaltige Feststoffkomponente a) verwendet. Die Dosierung des Katalysators erfolgte zusammen mit dem zur Druckregelung zugesetzten Frisch-Propylen. Die zudosierte Katalysatormenge wurde so bemessen, daß der mittlere Ausstoß von 150 kg Polypropylen pro Stunde aufrecht erhalten wurde. Ebenfalls in den Reaktor zudosiert wurde Triethylaluminium (in Form einer 1 molaren Heptanlösung) in einer Menge von 450 mmol/h und 45 mmol/h Isobutylisopropyldimethoxysilan (in Form einer 0,25 molaren Heptanlösung). Zur Molmassenregelung wurde Wasserstoff hinzudosiert. Die Wasserstoffkonzentration im Reaktionsgas betrug 2,9 Vol-% und wurde gaschromatographisch ermittelt.

Die bei der Polymerisation entstehende Reaktionswärme wurde durch Verdampfungskühlung abgeführt. Zu diesem Zweck wurde ein Kreisgasstrom, der quantitativ das 4- bis 6-fach der umgesetzten Gasmenge ausmacht, im Kreis geführt. Das verdampfte Propylen wurde nach Passieren der Reaktionszone am Kopf des Reaktors abgezogen, in einem Kreisgasfilter von mitgerissenen Polymerteilchen getrennt und gegen Zweitwasser in einem Wärmetauscher kondensiert. Das kondensierte Kreisgas wurde bis 40°C wieder in den Reaktor zurückgepumpt. Der im Kondensator nicht kondensierbare Wasserstoff wurde durch einen Ejektor abgesaugt und dem flüssigen Kreisgasstrom wieder zugeführt. Die Temperatur im Reaktor wurde über den Kreisgasdurchfluß geregelt und betrug 80°C.

Durch kurzzeitiges Entspannen des Reaktors über ein Tauchrohr wurde sukzessive Polymergries aus dem Reaktor entfernt. Die Austragsfrequenz wurde mit Hilfe des erfindungsgemäßen Verfahrens durch radioaktive Rückstreumessung ermittelt. Dies erfolgte mit Hilfe einer Stabsonde, die in der virtuellen Achse des freitragenden Wendelrührers in den Reaktor eingeführt wurde und eine Meßeinheit aus einem integrierten radioaktiven Strahler (Cs¹³⁷, 185 MBq) und einem Szintillationszähler besteht.

Die Austragsfrequenz wurde über eine Stabsonde mit integriertem radioaktiven Strahler (Cs¹³⁷, 185 MBq) / Szintillationszähler-Einheit) ermittelt. Vor Inbetriebnahme wurde die Stabsonde mit Hilfe eines Vergleichs der rückgestreuten Strahlungsintensität (Impulsratenvergleich) vor dem Polymerisationsstart an die bewegte Phasengrenzfläche zwischen Gasraum und Pulverbett in der Trombenmitte bei 80°C, 80 U/min Rührerumdrehung und 200 kg/h Frisch-Propylen über den Wellenspalt bei Betriebsdruck herangeführt, dort fixiert und zur Reaktorfüllstandskontrolle verwendet. Die verwendete Polymergriesmenge vor Polymerisationsstart im Reaktor waren 240 kg. Nach 75 Stunden stabiler Gasphasenpolymerisation wurde der Reaktor entspannt. Anschließend wurde die Menge an Polymergries im Reaktor gewogen und ergab 236 kg.

Die Auswertung der Trendlinien der Druck- und Temperaturführung sowie die Meßsignalwiedergabe der radioaktiven Rückstreumessung ergab, dass die Temperatur- und die Druckführung exakt linear verlaufen und eine stabile Kreisgasführung erlauben. Aufgrund der radioaktiven Rückstreumessung zur Reaktorfüllstandskontrolle ergeben sich Meßsignale mit einer diskreten Sägezahnstruktur, die eine standkontrollierte Prozeßführung in engen Grenzen erlaubt, wodurch austragsbedingte Druck- und Temperaturschwankungen signifikant verbessert werden. Die einzelnen Verfahrensparameter sowie die Eigenschaften des erhaltenen Propylenhomopolymers sind in der nachfolgenden Tabelle I wiedergegeben.

Vergleichsbeispiel A

Die Polymerisation im kontinuierlichen 800 1 Gasphasenreaktor wurde analog zu Beispiel 1 durchgeführt. Die Reaktorfüllstandskontrolle wurde mit Hilfe einer radioaktiven Absorptionsmessung durchgeführt. Der radioaktive Strahler war ein Co60-Stabpräparat an der Reaktoraußenwand und der Detektor war am Reaktordeckel angebracht. Hierfür wurde die Detektion der radioaktiven Absorptionsmessung unter Betriebsdruck mit Propylen bei 80°C im produktfreien Zustand auf 5 % gesetzt und nach Befüllen mit 250 kg Polymergries auf 95 % gesetzt. Die Automation der Polymerausträge erfolgte im kontinuierlichen Polymerisationsbetrieb bei Erreichen von 85 % Meßanzeige.

Nach 75 Stunden stabiler Gasphasenpolymerisation wurde der Reaktor entspannt. Die Menge an Polymergries im Reaktor wurde gewogen und ergab 227 kg.

Die Auswertung der Trendlinien der Druck- und Temperaturführung sowie die Meßsignalwiedergabe der radioaktiven Absorptionsmessung ergab, dass bei den Trendlinien der Druck- und Temperaturführung langgezogene Abweichungen von ca 1 bis 2 % vom Mittelwert innerhalb von einer Stunde auftraten. Die Meßsignalwiedergabe der radioaktiven Absorptionsmessung wies unregelmäßige oszillierende Schwankungen im Sekundenbereich auf, deren Maxima und Minima mehr als 50 % vom Mittelwert einer idealisierten Kurve mit Sägezahnstruktur sowohl bezüglich der Intensität als auch bezüglich der Zeitachse abwichen. Die einzelnen Verfahrensparameter sowie die Eigenschaften des erhaltenen Propylenhomopolymers sind in der nachfolgenden Tabelle I wiedergegeben.

### Beispiel 2

Die Polymerisation im kontinuierlichen 800 1 Gasphasenreaktor wurde analog zu Beispiel 1 durchgeführt. Der Reaktordruck betrug 23 bar und die Reaktortemperatur war 80°C. Die Wasserstoffkonzentration im Reaktionsgas betrug 0,2 % und wurde gaschromatographisch ermittelt. Zusätzlich wurde 1,0 Vol% Ethylen in den Reaktor dosiert und die Ethylenkonzentration wurde ebenfalls gaschromatographisch ermittelt.

Vor Inbetriebnahme wurde die Stabsonde mit integrierter Rückstreumessung analog zu Beispiel 1 an die bewegte inhomogene Phasengrenzfläche zwischen Gasraum und Pulverbett herangeführt.

Im Vergleich zu Beispiel 1 mußte hierfür die Stabsonde um 7 cm tiefer abgesenkt werden.

Nach 75 Stunden stabiler Gasphasenpolymerisation wurde der Reaktor entspannt. Die Innenbesichtigung ergab 0,6 kg Brocken im Reaktor. Es wurde keine Belagsbildung an der Reaktorwand oder an der Rührerwendel beobachtet. Die Menge an Polymergriesbett im Reaktor wurde anschließend gewogen und ergab 237 kg.

Die Auswertung der Trendlinien der Druck- und Temperaturführung sowie die Meßsignalwiedergabe der radioaktiven Rückstreumessung ergab, dass die Temperatur- und die Druckführung exakt linear verlaufen und eine stabile Kreisgasführung erlauben. Aufgrund der radioaktiven Rückstreumessung zur Reaktorfüllstandskontrolle ergeben sich Meßsignale mit einer diskreten Sägezahnstruktur, die eine standkontrollierte Prozeßführung in engen Grenzen erlaubt, wodurch austragsbedingte Druck-.und Temperaturschwankungen signifikant verbessert werden.

Die einzelnen Verfahrensparameter sowie die Eigenschaften des erhaltenen Propylen-Ethylen-Copolymers sind in der nachfolgenden Tabelle I wiedergegeben.

### Vergleichsbeispiel B

Die Polymerisation im kontinuierlichen 800 1 Gasphasenreaktor wurde analog zu Vergleichsbeispiel A durchgeführt. Die Prozeßparameter waren analog zu Beispiel 2.

Die Kalibrierung der radioaktiven Absorptionsmessung erfolgte analog zu vergleichsbeispiel A. Die Reaktorstandskontrolle im kontinuierlichen Polymerisationsbetrieb wurde auf 89 % eingestellt.

Nach 75 Stunden stabiler Gasphasenpolymerisation wurde der Reaktor entspannt. Die Innenbesichtigung ergab 4 kg Brocken im Reaktor mit Belagsbildungen an der Rührerwendel. Die Menge an Polymergriesbett im Reaktor nach der Abstellung lag bei 217 kg.

Die Auswertung der Trendlinien der Druck- und Temperaturführung sowie die Meßsignalwiedergabe der radioaktiven Absorptionsmessung ergab, dass bei den Trendlinien der Druck- und Temperaturführung langgezogene Schwankungen von ca 1 bis 2 % vom Mittelwert innerhalb von 1 Stunde auftraten. Die Meßsignalwiedergabe der radioaktiven Absorptionsmessung wies unregelmäßige oszillierende Schwankungen im Sekundenbereich auf, deren Maxima und Minima mehr als 50 % vom Mittelwert einer idealisierten Kurve mit Sägezahnstruktur sowohl bezüglich der Intensität als auch bezüglich der Zeitachse abwichen.

Die einzelnen Verfahrensparameter sowie die Eigenschaften des erhaltenen Propylen-Ethylen-Copolymer sind in der nachfolgenden Tabelle I wiedergegeben.

Die in der Tabelle I aufgeführten Eigenschaften der erhaltenen Polymere wurden folgendermaßen ermittelt:
- Schmelzflußrate (MFR):: nach ISO 1133, bei 230°C und 2,16 kg
- Ethylengehalte [Gew.-%]:: durch Auswertung entsprechender IR-Spektren
- Produktivität: [g Polymer / g Katalysator]: Aus dem Chlorgehalt des erhaltenen Polymeren, wobei dieser wiederum durch Elementaranalyse bestimmt wird. Dabei wurde die Produktivität aus dem Quotienten aus dem Chlorgehalt des Katalysators und dem Chlorgehalt des erhaltenen Polymeren bestimmt.
- Polymergrießmorphologie [Gew.%]:: durch Siebanalyse

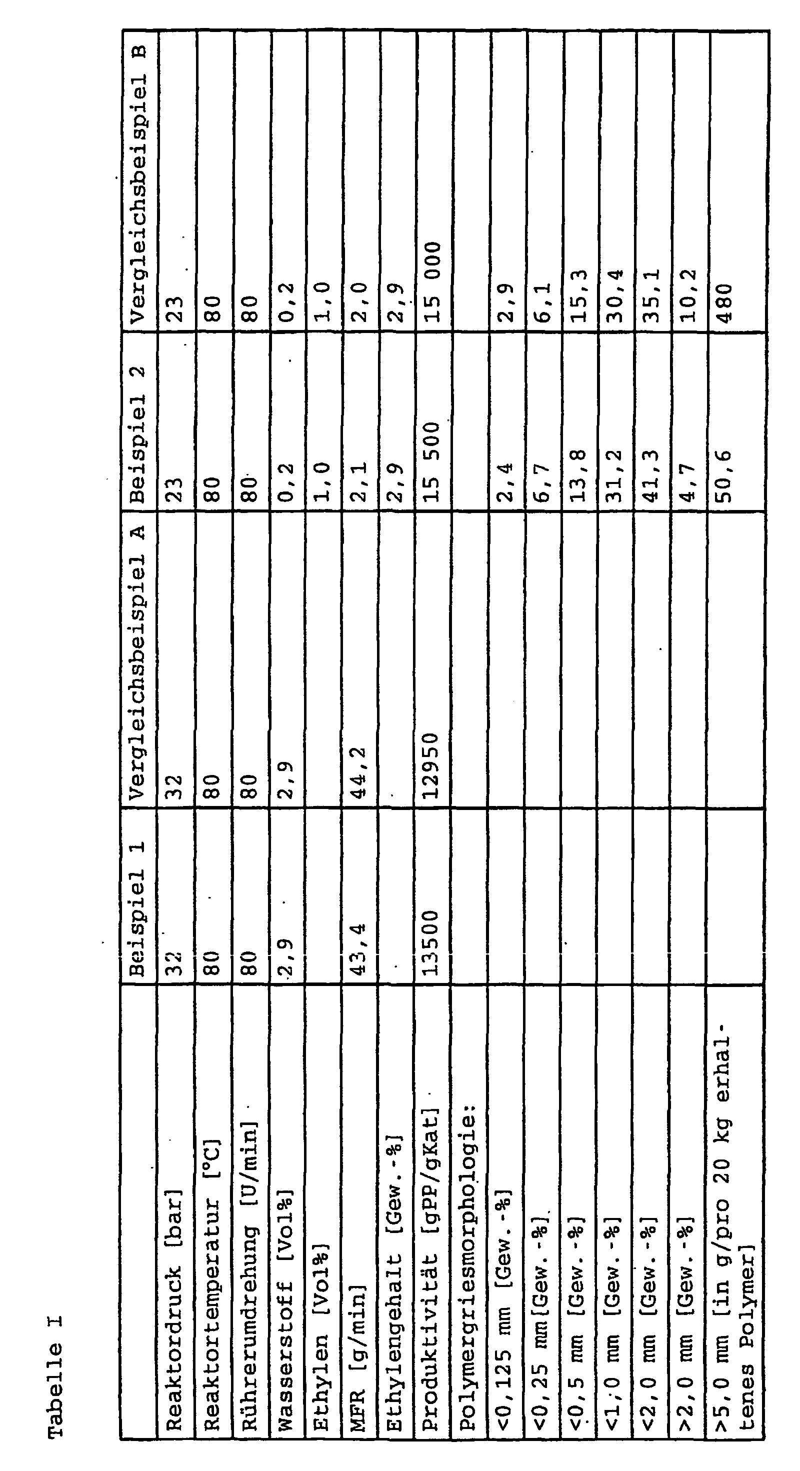

Aus den erhaltenen Meßergebnissen folgt u. a., dass die radioaktive Rückstreumessung gegenüber der radioaktiven Absorptionsmessung u. a. folgende Vorteile aufweist: eine diskrete Sägezahnstruktur des Meßsignals für die Füllstandsmessung, weiterhin äquidistante Austragsintervalle, eine schnelle und empfindliche Reaktion auf Füllstandsänderungen, eine verbesserte Temperatur-, Druck- und Kreisgasführung, eine erhöhte Prozeßstabilität verbunden mit einer optimierten Morphologie des erhaltenen Polymerpulvers. Weiterhin beobachtet man eine geringere Brockenbildungstendenz im Reaktor und eine Steigerung der Produktivität. Darüber hinaus erweist es sich als günstig, daß die radioaktive Rückstreumessung als absolute Reaktorfüllstandsmessung es ermöglicht, die Abhängigkeit der radioaktiven Absorptionsmessung zur Standkontrolle u.a. von der Trombenform, den Betriebsparametern und vom Produkttyp mit Hilfe der Rückstreusonde zu eliminieren. Bei der radioaktiven Absorptionsmessung ist es möglich, mit Strahlern geringerer Aktivität zu arbeiten, was zur Folge hat, daß das Strahlungsfeld um den Reaktor niedriger wird und daß die verwendeten Strahler leichter handhabbar sind.

## Patentansprüche

1. Verfahren zu Reaktorfüllstandsmessung bei kontinuierlich betriebenen Polymerisationsprozessen, wobei die jeweilige Phasengrenzfläche im Reaktor mit Hilfe einer ionisierenden Strahlung gemessen wird, **dadurch gekennzeichnet, dass** mindestens eine Meßeinheit bestehend aus einer Strahlungsquelle, welche eine ionisierende Strahlung emittiert und einen entsprechenden Detektor an die Phasengrenzfläche im Reaktor herangeführt und dort flexibel fixiert wird, wobei die Reaktorfüllstandsmessung in der Weise erfolgt, dass man die Phasengrenzfläche mit Hilfe der radioaktiven Rückstreumessung ermittelt.

2. Verfahren nach Anspruch 1, **dadurch gekennzeichnet, dass** mehrere Meßeinheiten bestehend aus jeweils einer Strahlungsquelle und einem Detektor an unterschiedlichen Stellen im Reaktor, aber in der Nähe der Phasengrenzfläche zur Reaktorfüllstandsmessung eingesetzt werden, wobei diejenige Meßeinheit verwendet wird, die der Phasengrenzfläche am nächsten steht.

3. Verfahren nach den Ansprüchen 1 oder 2, **dadurch gekennzeichnet, dass** eine Strahlungsquelle verwendet wird, welche eine radioaktive Strahlung emittiert.

4. Verfahren nach den Ansprüchen 1 bis 3, **dadurch gekennzeichnet, dass** als Detektor ein Szintillationszähler eingesetzt wird.

5. Verfahren nach den Ansprüchen 1 bis 4, **dadurch gekennzeichnet, dass** dieses bei der kontinuierlichen Polymerisation von C₂-C₈-Alk-1-enen verwendet wird.

6. Verfahren nach den Ansprüchen 1 bis 5, **dadurch gekennzeichnet, dass** es sich bei den Polymerisationsprozessen um Gasphasenverfahren handelt.

7. Verfahren nach den Ansprüchen 1 bis 6, **dadurch gekennzeichnet, dass** die Polymerisationsprozesse mittels eines Ziegler-Natta-Katalysatorsystems durchgeführt werden, welches neben einer titanhaltigen Feststoffkomponente a₎ noch Cokatalysatoren in Form von organischen Aluminiumverbindungen b), und Elektronendonorverbindungen c₎, aufweist.

8. Verfahren nach den Ansprüchen 1 bis 7, **dadurch gekennzeichnet, dass** die Polymerisationsprozesse mittels eines Ziegler-Natta-Katalysatorsystems auf der Basis von Metallocenverbindungen oder von polymerisationsaktiven Metallkomplexen durchgeführt werden.

9. Vorrichtung zur Reaktorfüllstandsmessung bei kontinuierlich betriebenen Polymerisationsprozessen durch Messung der jeweiligen Phasengrenzfläche im Reaktor mit Hilfe einer ionisierenden Strahlung, wobei der jeweilige Reaktor mindestens eine Meßeinheit aufweist, die aus einer Strahlungsquelle, welche eine ionisierende Strahlung emittiert und einen entsprechenden Detektor besteht, wobei die Meßeinheit flexibel an der Phasengrenzfläche im Reaktor fixiert ist und die Reaktorfüllstandsmessung mit Hilfe der radioaktiven Rückstreumessung erfolgt.

10. Vorrichtung nach Anspruch 9, wobei die Meßeinheit bestehend aus der Strahlungsquelle und dem Detektor an einem beweglichen Stab befestigt ist, der an der Phasengrenzfläche im Reaktor fixiert ist.

11. Vorrichtung nach Anspruch 9, wobei mehrere Meßeinheiten bestehend aus jeweils einer Strahlungsquelle und einem Detektor an unterschiedlichen Stellen im Reaktor aber in der Nähe der Phasengrenzfläche befestigt sind.

## Claims

1. A method of measuring the fill level of a reactor in continuously operated polymerization processes, where the respective phase interface in the reactor is measured by means of ionizing radiation, wherein at least one measuring unit comprising a radiation source which emits ionizing radiation and a corresponding detector is brought to the phase interface in the reactor and flexibly installed there, with the fill level of the reactor being measured by determining the phase interface by means of the radioactive backscattering measurement.

2. A method as claimed in claim 1, wherein a plurality of measuring units each comprising a radiation source and a detector are positioned at different points in the reactor but in the vicinity of the phase interface for measuring the fill level of the reactor, with the measurement being carried out using that measuring unit which is closest to the phase interface.

3. A method as claimed in claim 1 or 2, wherein a radiation source which emits radioactive radiation is used.

4. A method as claimed in any of claims 1 to 3, wherein a scintillation counter is used as detector.

5. A method as claimed in any of claims 1 to 4 used in the continuous polymerization of C₂-C₈-alk-1-enes.

6. A method as claimed in any of claims 1 to 5 used in gas-phase polymerization processes.

7. A method as claimed in any of claims 1 to 6 used in polymerization processes carried out by means of a Ziegler-Natta catalyst system comprising a titanium-containing solid component a₎ together with cocatalysts in the form of organic aluminum compounds b₎, and electron donor compounds c₎.

8. A method as claimed in any of claims 1 to 7 used in polymerization processes carried out by means of a Ziegler-Natta catalyst system based on metallocene compounds or on polymerization-active metal complexes.

9. An apparatus for measuring the fill level of a reactor in continuously operated polymerization processes by measuring the respective phase interface in the reactor by means of ionizing radiation, where the respective reactor has at least one measuring unit comprising a radiation source which emits ionizing radiation and a corresponding detector and the measuring unit is flexibly installed at the phase interface in the reactor and the reactor fill level is measured by means of the radioactive backscattering measurement.

10. An apparatus as claimed in claim 9, wherein the measuring unit comprising the radiation source and the detector is mounted on a moveable rod which is installed at the phase interface in the reactor.

11. An apparatus as claimed in claim 9, wherein a plurality of measuring units each comprising a radiation source and a detector are installed at different points in the reactor but in the vicinity of the phase interface.

## Revendications

1. Procédé de détermination de l'état de remplissage d'un réacteur pour la mise en oeuvre de procédés de polymérisation opérant en continu, dans lequel la surface de séparation des phases respectives dans le réacteur est déterminée par un rayonnement ionisant, **caractérisé en ce que en ce que** l'on emploie au moins une unité de détermination, consistant en une source de rayonnement, qui émet un rayonnement ionisant, et en un détecteur associé, ladite unité étant amenée à la surface de séparation des phases et y étant fixée de façon mobile, de sorte que la détermination de l'état de remplissage du réacteur soit effectuée par détermination de la surface de séparation des phases au moyen de la mesure du flux radioactif rétrodiffusé.

2. Procédé selon la revendication 1, **caractérisé en ce que** plusieurs unités de détermination, chacune formée d'une source de rayonnement et d'un détecteur, sont disposées en des positions différentes du réacteur, proches toutefois de la surface de séparation des phases, dans lequel la détermination de l'état de remplissage du réacteur est effectuée par l'unité de détermination la plus proche de la surface de séparation des phases.

3. Procédé selon la revendication 1 ou 2, **caractérisé en ce qu'**on utilise une source de rayonnement émettant un rayonnement radioactif.

4. Procédé selon les revendications 1 à 3, **caractérisé en ce que**, en tant que détecteur, est employé un compteur par scintillations.

5. Procédé selon les revendications 1 à 4, **caractérisé en ce que** il est mis en oeuvre pour la polymérisation en continu de C₂-C₈-alkènes-1.

6. Procédé selon les revendications 1 à 5, **caractérisé en ce que** le procédé de polymérisation est un procédé de polymérisation en phase gazeuse.

7. Procédé selon les revendications 1 à 6, **caractérisé en ce que** le procédé de polymérisation est mis en oeuvre en présence d'un système catalytique de type Ziegler-Natta qui comporte un constituant solide à base de titane (a), un co-catalyseur sous forme d'un composé organo-aluminium (b) et un composé électrodonneur (c).

8. Procédé selon les revendications 1 à 7, **caractérisé en ce que** le procédé de polymérisation est mis en oeuvre en présence d'un système catalytique de type Ziegler-Natta, sur la base de composés métallocènes ou de complexes métalliques actifs à l'égard de la polymérisation.

9. Dispositif de détermination de l'état de remplissage d'un réacteur dans des procédés de polymérisation opérant en continu, par détermination de la surface de séparation des phases dans le réacteur au moyen d'un rayonnement ionisant, dans lequel le réacteur correspondant comporte au moins une unité de détermination, consistant en une source de rayonnement, qui émet un rayonnement ionisant, et en un détecteur correspondant, l'unité de détermination étant disposée de façon mobile à la surface de séparation des phases et en ce que la détermination de l'état de remplissage est effectuée par mesure du flux radioactif rétrodiffusé.

10. Dispositif selon la revendication 9, **caractérisé en ce que** l'unité de détermination, formée de la source de rayonnement et du détecteur, est fixée sur une tige mobile, qui est fixée dans le réacteur au niveau de la surface de séparation des phases.

11. Dispositif selon la revendication 9, **caractérisé en ce que** il comprend plusieurs unités de détermination, chacune formée d'une source de rayonnement et d'un détecteur, fixées en des positions différentes du réacteur, proches toutefois de la surface de séparation des phases.
